# EUROPEAN PATENT APPLICATION

(11) **EP 3 907 267 A1**
(43) Date of publication of application: **10.11.2021**
(21) Application number: 20173653.5
(22) Date of filing: 08.05.2020
(51) Int. Cl.: C10B 53/07, C10G 25/00, C10G 1/10, C10G 1/00

(54) **PROCESS FOR PURIFYING A CRUDE PYROLYSIS OIL ORIGINATING FROM THE PYROLYSIS OF PLASTIC WASTE**

(71) Applicant: BASF SE, 67056 Ludwigshafen am Rhein (DE)
(72) Inventor: BRUNETTI, Fulvio Giacomo, 67056 Ludwigshafen (DE); PINKOS, Rolf, 67056 Ludwigshafen (DE); SHEVCHENKO, Grigory Andre, 67056 Ludwigshafen (DE); PILARSKI, Oliver, 67056 Ludwigshafen (DE); HAUPT, Sebastian, 67056 Ludwigshafen (DE); MUELLER, Christian, 67056 Ludwigshafen (DE); KOEPKE, Daniel, 67056 Ludwigshafen (DE); LANGE DE OLIVEIRA, Armin, 69123 Heidelberg (DE); IFFLAND, Gabriele, 67056 Ludwigshafen (DE)
(74) Representative: Reitstötter Kinzebach

(57) **Abstract**

The present invention relates to a process for purifying a crude nitrogen-containing, sulfur-containing, halogen-containing pyrolysis oil originating from the pyrolysis of plastic waste, comprising
(i) subjecting the crude pyrolysis oil to a treatment with a trapping agent selected from (a) an elemental metal of group 1, 2, 6, 7, 8, 9, 10, 11, 12, 13 of the IUPAC periodic table, a mixture or an alloy thereof; (b) an oxide of metals of group 1, 2, 6, 7, 8, 9, 10, 11, 12, 13 of the IUPAC periodic table or a mixture thereof; (c) an alkoxide of metals of group 1, 2 of the IUPAC periodic table or a mixture thereof; (d) a solid sorption agent as defined in the claims; or a combination of at least two trapping agents (a), (b), (c) or (d);
(ii) separating the product obtained into a purified pyrolysis oil fraction having a reduced nitrogen, sulfur and halogen content in relation to the crude pyrolysis oil and a fraction comprising the trapping agent which has bound at least a part of the sulfur, nitrogen, halogen present in the crude pyrolysis oil.

## Description

The present invention relates to a process for purifying a crude pyrolysis oil originating from the pyrolysis of plastic waste to obtain a purified pyrolysis oil having a reduced nitrogen, sulfur and halogen content in relation to the provided crude pyrolysis oil. The invention further relates to the use of said pyrolysis oil, e.g. as feedstock for a (steam) cracker or as feedstock for a partial oxidation unit to produce syngas.

### BACKGROUND OF THE INVENTION

Currently, plastic waste is still largely landfilled or incinerated for heat generation. Chemical recycling is an attractive way to convert waste plastic material into useful chemicals. An important technique for chemically recycling plastic waste is pyrolysis. The pyrolysis is a thermal degradation of plastic waste in an inert atmosphere and yields value added products such as pyrolysis gas, liquid pyrolysis oil and char (residue), wherein pyrolysis oil is the major product. The pyrolysis gas and char can be used as fuel for generating heat, e.g. for reactor heating purposes. The pyrolysis oil can be used as source for syngas production and/or processed into chemical feedstock such as ethylene, propylene, C₄ cuts, etc. for example in a (steam) cracker.

Typically, the plastic waste is mixed plastic waste composed of different types of polymers. The polymers are often composed of carbon and hydrogen in combination with other elements such as chlorine, fluorine, sufur and nitrogen that complicate recycling efforts. The elements other than carbon and hydrogen may be harmful during the further processing of the crude pyrolysis oil, since they may deactivate or poison catalysts used in the further processing of the pyrolysis oil. During (steam) cracking, halogen-containing compounds can damage the cracker by corrosion in that they release hydrogen halide. Sulfur-containing compounds can deactivate or poison catalysts used in the cracker, or can contaminate the cracker products. Nitrogen-containing impurities may also poison downstream catalysts. In addition, they may cause a safety problem by forming explosive NOₓ when heated. When mixed plastics containing polyvinyl chloride (PVC) is thermally degraded, compounds having double carbon bonds and hydrogen chloride is formed. The hydrogen chloride liberated from PVC attacks the compounds having carbon-carbon double bonds leading to the formation of chloroorganic compounds. Plastic waste typically contains heteroatom-containing additives such as stabilizers and plasticizers that have been incorporated to improve the performance of the polymers. Such additives also often comprise nitrogen, halogen and sulfur containing compounds and heavy metals. For example, waste engine oils, transformer oils, hydraulic oils and machine oils may contain heavy metal abrasion. The heavy metals are often toxic and the quality of the pyrolysis oil is reduced by the presence of heavy metal impurities. Furthermore, plastic waste often may be uncleaned plastics with residue that may also contain elements other carbon and hydrogen. Therefore, the reduction of the nitrogen, sulfur, halogen content in the pyrolysis oil as well as the heavy-metal content is essential for any profit-generating processing of the pyrolysis oil. Especially, a high quality pyrolysis oil rich in carbon and hydrogen and low in elements other than carbon and hydrogen is preferred as feedstock to prevent catalyst deactivation and corrosion problems in downstream refinery processes.

Accordingly, a process for upgrading plastic waste pyrolysis oil by reducing the nitrogen, sulfur, halogen content and preferably also the heavy metal content in the pyrolysis oil would be highly desirable. Furthermore, it would be desirable to provide a high quality plastic waste pyrolysis oil that can be converted into high-value endproducts in an economic process.

WO 2020/008050 describes a method for producing hydrocarbon fuel and additional hydrocarbons from plastic waste. The process comprises exposing the waste to a primary cracking unit (pyrolysis unit or a cracking unit) to obtain a hydrocarbon gas. The obtained hydrocarbon gas is then exposed to a catalytic hydrogenation to obtain a hydrocarbon fluid followed by fractional separation of said fluid to obtain at least one final product. The process includes upgrading of the obtained hydrocarbon gas by carrying out the primary cracking in the presence of minerals such as CaO to reduce the chlorine and sulfur content.

US 2013/0043160 describes a process for removing sulfur, nitrogen and metals from an oil feedstock such as heavy oil, bitumen, shale oil by treating the feedstock with an alkali metal and a radical trapping substance.

Adsorption and solvent extraction are known techniques for removing sulfur and nitrogen compounds from liquid hydrocarbon fuels. For example, WO 2017/100617 describes the removal of oxygen, sulfur and nitrogen heteroatoms from fluids such as hydrocarbons with different adsorbents. US 6,248,230 describes a method for manufacturing cleaner fuels by removing natural, polar compounds, i.e. sulfur and nitrogen containing compounds by adsorption and solvent extraction as an effective pretreatment, upstream of a hydrodesulfurization unit.

Hydrotreating or hydroprocessing is a known technique for removing sulfur and nitrogen impurities from the crude oil using hydrogen at elevated pressure and temperature in the presence of a catalyst. In addition, unsaturated hydrocarbons, if present, are hydrogenated. The catalyst typically comprises at least one group 6 metal component and at least one group 8, 9 or 10 metal component composited with a support. The active and stable form of these hydrotreating catalysts is the sulfurized form. Often, they are in oxide form after preparation, and therefore must undergo sulfurization using hydrogen sulfide before being used. In the hydrodesulfurization (HDS), the sulfur compounds are hydrogenated and cracked. Carbon-sulfur bonds are broken, and the sulfur for the most part is converted to hydrogen sulfide which may be removed from the flue gas by amine scrubbing. In the hydrodenitrogenation (HDN), the nitrogen compounds are hydrogenated and cracked. Carbon-nitrogen bonds are broken, and the nitrogen is converted to ammonia and evolved from the process. The art is silent about sacrificying the catalyst for removing nitrogen and sulfur impurities from crude pyrolysis oil.

R. Serefentse describes in Procedia Manufacturing 35 (2019), 762-769 different methods for the desulphurization of pyrolysis oil obtained from used tyres.

None of the above-mentioned documents focuses on the simultaneous reduction of the sulfur, nitrogen and halogen content of a pyrolysis oil originating from the pyrolysis of plastic waste. Since catalysts and reactors used in downstream cracking and related refinery processes are valuable, it would be highly desirable to have methods for reducing the nitrogen, sulfur and halogen content of crude pyrolysis oil originating from the pyrolysis of plastic waste.

Accordingly, it is a first object to provide a process for improving the quality of pyrolysis oil originating from the pyrolysis of plastic waste by reducing its nitrogen, sulfur and halogen content, and, if present, preferably also the heavy metal content. A second object is to provide a pyrolysis oil originating from the pyrolysis of a nitrogen-containing, sulfur-containing and halogen-containing plastic waste which can more easily processed further, e.g. as feedstock for a (steam) cracker or feedstock for a partial oxidation due its reduced nitrogen, sulfur and halogen content, and in particular also reduced heavy metal content, in relation to an untreated pyrolysis oil.

Surprisingly, it has been found that these objects are achieved by a simple and economic process as explained below.

### SUMMARY OF THE INVENTION

Therefore, according to a first aspect, the present invention relates to a process for purifying a nitrogen-containing, sulfur-containing and halogen-containing crude pyrolysis oil originating from the pyrolysis of plastic waste, the process comprising the steps
(i) subjecting the crude pyrolysis oil to a treatment with a trapping agent capable of binding sulfur, nitrogen and halogen, wherein the trapping agent is selected from
   (a) an elemental metal of group 1, 2, 6, 7, 8, 9, 10, 11, 12, 13 of the IUPAC periodic table of elements or a mixture thereof or an alloy thereof;
   (b) an oxide of metals of group 1, 2, 6, 7, 8, 9, 10, 11, 12, 13 of the IUPAC periodic table of elements or a mixture thereof;
   (c) an alkoxide of metals of group 1, 2 of the IUPAC periodic table of elements, or a mixture thereof;
   (d) a solid sorption agent selected from activated carbon, alumina, silica, clay materials, zeolites, ion exchange resins, absorbent organic polymers or a combination thereof;
   or a combination of at least two trapping agents (a), (b), (c) and (d);
(ii) separating the product obtained into a purified pyrolysis oil fraction having a reduced nitrogen, sulfur and halogen content in relation to the crude pyrolysis oil and a fraction comprising the trapping agent which has bound at least a part of the sulfur, nitrogen and halogen present in the crude pyrolysis oil.

In a further aspect the present invention relates to a process for the production of syngas (also known as synthesis gas), i.e. a gas mixture consisting primarily of hydrogen and carbon monoxide, by subjecting a pyrolysis oil purified by the process according to the invention to a partial oxidation.

The invention therefore also relates to a process for the production of syngas, comprising the steps:
(i) providing a crude nitrogen-containing, sulfur-containing and halogen-containing pyrolysis oil originating from the pyrolysis of plastic waste;
(ii) subjecting the crude pyrolysis oil to a process as defined herein; and
(iii) subjecting the purified pyrolysis oil obtained in step (ii) to a partial oxidation to produce syngas.

In a further aspect the present invention relates to a method for converting higher molecular weight hydrocarbon compounds into lower molecular weight hydrocarbon compounds comprising feeding the pyrolysis oil obtainable by a process as defined above and in the following in a (steam) cracker unit, treating the pyrolysis oil in the (steam) cracker unit and isolating a stream comprising the lower molecular weight hydrocarbon compounds.

The invention therefore also relates to a process for the production of hydrocarbon compounds having a lower molecular weight than a pyrolysis oil originating from the pyrolysis of plastic waste, comprising the steps
(i) providing a crude nitrogen-containing, sulfur-containing and halogen-containing pyrolysis oil originating from the pyrolysis of plastic waste;
(ii) subjecting the crude pyrolysis oil to a process as defined herein, and
(iii) subjecting the purified pyrolysis oil obtained in step (ii) to a treatment in a (steam) cracker unit and isolating a stream comprising the lower molecular weight hydrocarbon compounds.

In a further aspect the present invention relates to the use of the purified pyrolysis oil obtainable by the process herein as feedstock for a (steam) cracker or as feedstock for a partial oxidation unit to produce syngas.

### DETAILED DESCRIPTION OF THE INVENTION

The aforementioned process of the invention is associated with several advantages. The pyrolysis oil purified by the process according to the present invention is distinguished by very low nitrogen, sulfur and halogen contents up to level of few ppms. Advantageously, the inventive process enables the simultaneous removal of different heteroatoms, i.e., nitrogen, sulfur, halogen, and if present, also heavy metals, from a crude pyrolysis oil. Thus, the purified pyrolysis oil can be fed into a (steam) cracker without any additional pre-treatment so that additional costs are avoided. For example, a pretreatment of the plastic waste such as sorting and cleaning can be minimized or even omitted. Advantageously, the process can be performed on an industrial scale. In addition, the process is economical. In particular, the process allows to provide a high quality pyrolysis oil that can be used as feedstock for a partial oxidation unit to produce syngas. There are also additional advantages such as the provision of an enviromental friendly feed, longer liftetime of catalysts used in any downstream processing units such as cracking units, reforming units, etc.

It has also surprisingly found that the other objects are solved by the aforementioned process according to the invention.

In the context of the present invention, the term "pyrolysis" relates to a thermal decomposition or degradation of end of life plastics under inert conditions and results in a gas, a liquid and a solid char fraction. During the pyrolysis, the plastics are converted into a great variety of chemicals including gases such as H₂, C₁-C₄-alkanes, C₂-C₄-alkenes, ethyne, propyne, 1-butyne, pyrolysis oil having a boiling temperature of 25 to 500°C and char. The term "pyrolysis" includes slow pyrolysis, fast pyrolysis, flash catalysis and catalytic pyrolysis. These type of pyrolysis differ in the process temperature, heating rate, residence time, feed particle size, etc. resulting in different product quality.

In the context of the present invention, the term "pyrolysis oil" is understood to mean any oil originating from the pyrolysis of plastic waste.

In the context of the present invention, the term "plastic waste" refers to any plastic material discarded after use, i.e. the plastic material has reached the end of its useful life. The plastic waste can be pure polymeric plastic waste, mixed plastic waste or film waste, including soiling, adhesive materials, fillers, residues etc. The plastic waste has a nitrogen content, sulfur content, halogen content and optionally also a heavy metal content. The plastic waste can originate from any plastic material containing source. Accordingly the term "plastic waste" includes industrial and domestic plastic waste including used tires and agricultural and horticultural plastic material. The term "plastic waste" also includes used petroleum-based hydrocarbon material such as used motor oil, machine oil, greases, waxes, etc.

Typcially, plastic waste is a mixture of different plastic material, including hydrocarbon plastics, e.g., polyolefins such as polyethylene (HDPE, LDPE) and polypropylene, polystyrene and copolymers thereof, etc., and polymers composed of carbon, hydrogen and other elements such as chlorine, fluorine, oxygen, nitrogen, sulfur, silicone, etc., for example chlorinated plastics, such as polyvinylchloride (PVC), polyvinylidene chloride (PVDC), etc., nitrogen-containing plastics, such as polyamides (PA), polyurethanes (PU), acrylonitrile butadiene styrene (ABS), etc., oxygen-containing plastics such as polyesters, e.g. polyethylene terephthalate (PET), polycarbonate (PC), etc.), silicones and/or sulfur bridges crosslinked rubbers. PET plastic waste is often sorted out before pyrolysis, since PET has a profitable resale value. Accordingly, the plastic waste to be pyrolyzed often contains less than about 10% by weight, preferably less than about 5% by weight and most preferably substantially no PET based on the dry weight of the plastic material. One of the major components of waste from electric and electronic equipment are polychlorinated biphenyls (PCB). Typically, the plastic material comprises additives, such as processing aids, plasticizers, flame retardants, pigments, light stabilizers, lubricants, impact modifiers, antistatic agents, antioxidants, etc. These additives may comprise elements other than carbon and hydrogen. For example, bromine is mainly found in connection to flame retardants. Heavy metal compounds may be used as lightfast pigments and/or stabilizers in plastics; cadmium, zinc and lead may be present in heat stabilizers and slip agents used in plastics manufacturing. The plastic waste can also contain residues. Residues in the sense of the invention are contaminants adhering to the plastic waste. The additives and residues are usually present in an amout of less than 50% by weight, preferably less than 30% by weight, more preferably less than 20% by weight, even more preferably less than 10% by weight based on the total weight of the dry weight plastic.

In the context of the present invention, the crude nitrogen, sulfur and halogen containing pyrolysis oil contains sulfur-containing compounds, nitrogen-containing compounds and halogen-containing compounds. In some embodiments, the crude pyrolysis oil also contains heavy metal compounds. In other words, the pyrolysis oil includes besides hydrocarbon compounds also hydrocarbons compounds having at least one heteroatom selected from halogen, nitrogen and sulfur, and if present, also heavy metals. The term "sulfur-containing compound" relates to hydrocarbon compounds comprising at least one sulfur heteroatom in the molecule including those hydrocarbon compounds that, in addition to sulfur, contain other heteroatoms such as oxygen, nitrogen, halides, etc. Examples of sulfur-containing compounds include thioles, sulfides, disulfides, sulfoxides, sulfones, sulfinic acids, sulfonic acid, sulfonic acid amides, sulfonate ester, ester of sulfuric acid, thioketones, thiocarboxylic acids, thioesters, dithiocarboxylic acids, thiocyanates, sulfonic acid amides etc. The term "nitrogen-containing compound" relates to hydrocarbon compounds comprising at least one nitrogen heteroatom including those hydrocarbon compounds that, in addition to nitrogen, contain other heteroatoms such as such as oxygen, sulfur, halogen, etc. Examples of the nitrogen-containig compounds include amines, imines, amides, imides, azides, azo compounds, oximes, hydrazones, hydrazines, cyanates, nitrates, nitriles, nitrite, nitro compounds, nitroso compounds, oximes, N-containing heteroaromates, carbamate ester, sulfonic acid amides, thiocyanates, sulfonic acid amides. The term "halogen-containing compound" relates to hydrocarbon compounds comprising at least one halogen heteroatom selected from fluorine, bromine, chlorine, iodine or combinations thereof including those hydrocarbon compounds that, in addition to halogen, contain other heteroatoms such as such as oxygen, sulfur, nitrogen, etc. Examples include aliphatic halides, (hetero)aromatic halides, aliphatic-aromatic halides, acyl halides, etc. The term "heavy metal-containing compound" relates to hydrocarbon compounds comprising at least one heteroatom selected from heavy metals or mixtures thereof in the compound, including those hydrocarbon compounds that, in addition to the heavy metal, contain other heteroatoms such as oxygen, sulfur, nitrogen and halogen. In the context of the present invention, the sulfur-containing compounds, nitrogen-containing compounds, halogen-containing compounds, and if present, heavy-metal containing compounds are also referred to as sulfur-containing impurities, nitrogen-containing impurities, halogen-containing impurities and, if present, heavy-metal containing impurities.

In the context of the present invention, the term "heavy metal" refers to a metal or metalloid having a density >4.51 g/cm³ (at 20°C). Examples include arsenic, antimony, bismuth, selenium, tin, cadmium, chromium, copper, mercury, nickel and lead.

In the context of the present invention, the abbreviated notation (steam) cracking includes both thermal cracking such as steam cracking and catalytic cracking such as catalytic hydrocracking and fluidized catalytic cracking (FCC). In a similar manner, the abbreviated notation (steam) cracker includes a thermal cracking reactor such as a steam cracker, and a catalytic cracking reactor, such as a catalytic hydrocracking reactor and a fluidized catalytic cracking reactor.

In the context of the present invention, the term "room temperature" which is also referred to as "ambient temperature" means a temperature of 20°C.

As used in the specification and the claims, the singular form "a", "an" and "the" includes plural references unless the content clearly dictates otherwise.

The word "essentially" in the context of the present invention encompasses the words "completely", "wholly" and "all". The word encompasses a proportion of 90% or more, such as 95% or more; 99% or more; or 100%.

In the context of the present invention, the term "combinations thereof is inclusive of one or more of the recited elements.

In the context of the present invention, the term "mixture thereof is inclusive of one or more of the recited elements.

In the context of the present invention, the term "trapping agent" refers to an agent that is sacrificied to physically or chemically bind at least a part of the sulfur, nitrogen, halogen and, if present, heavy metal content present in the crude pyrolysis oil. The trapping mechanism may involve breakage of carbon-sulfur, carbon-nitrogen and/or carbon-halogen bonds with release of hydrocarbon compounds devoid of sulfur, nitrogen and/or halogen, and concomitant capture of nitrogen, sulfur and/or halogen by the trapping agent. Alternatively, nitrogen-containing, sulfur-containing and/or halogen-containing compounds present in the crude pyrolysis oil may be adsorbed or otherwise physically bound to the trapping agent as such.

In the context of the present invention, the term "group(s)" in combination with an arabic numeral refers to the group(s) in the IUPAC periodic table of elements.

The term "halogen" denotes in each case fluorine, bromine, chlorine or iodine.

Suitable crude pyrolysis oil originates from the pyrolysis of nitrogen-containing, sulfur-containing and halogen-containing plastic waste. The plastics material used as feedstock for the production of said pyrolysis oil can be derived from any source comprising end of live plastic material. The content of sulfur, nitrogen, halogen and, if present, heavy metal of the pyrolysis oil can vary and depends on the type of the waste plastic material processed and pyrolysis conditions employed. Pyrolysis processes as such are known. They are described, e.g. in EP 0713906 and WO 95/03375. Suitable pyrolysis oils are also commercially available. The crude prolysis oil typcially is a liquid at 15°C. "Liquid at 15°C" in the terms of the present invention means that the pyrolysis oil has a density of at most of 1.0 g/mL, e.g. a density in the range from 0.70 to 0.98 g/mL, at 15°C and 1013 mbar, as determined according to DIN EN ISO 12185.

Depending on the waste plastic material subjected to the pyrolysis, the crude pyrolysis oil may have varying contents of sulfur, nitrogen, halogen and, if present, heavy metal. The crude prolysis oil typcially has a sulfur content of at least 30 mg/L, a nitrogen content of at least 30 mg/L and a halogen content of at least 30 mg/L.

In one embodiment, the crude pyrolysis oil has a sulfur content of 40 mg/L or more, such as 50 mg/L or more; or 100 mg/L or more; or 500 mg/L or more, relative to the total volume of the crude pyrolysis oil. In another embodiment, the crude pyrolysis oil has a sulfur content of 100 to 5000 mg/L, often 500 to 4000 mg/L, relative to the total volume of the crude pyrolysis oil.

In one embodiment, the crude pyrolysis oil has a nitrogen content of 50 mg/L or more, such as 100 mg/L or more; or 500 mg/L or more; or 800 mg/L or more, relative to the total volume of the crude pyrolysis oil. In another embodiment, the crude pyrolysis oil has a nitrogen content of 800 to 4000 mg/L, often 900 to 3000 mg/L, relative to the total volume of the crude pyrolysis oil.

In one embodiment, the crude pyrolysis oil has a halogen content of 40 mg/L or more, such as 80 mg/L or more; or 120 mg/L or more; or 400 mg/L or more; or 600 mg/L or more, relative to the total volume of the crude pyrolysis oil. In another embodiment, the crude pyrolysis oil has a halogen content of 100 to 1000 mg/L, often 120 to 900 mg/L, relative to the total volume of the crude pyrolysis oil.

Organofluorine, organochlorine, organobromine and/or organoiodine compounds typically are the source for the halogen content in the crude pyroylsis oil. Specifically, the halogen content is a bromine and chlorine content to 90% or more, such as 95% or more or even 100%. More specifically, the halogen content is to 90% or more, such as 95% or more or even 100% a chlorine content.

In case that the crude pyrolysis oil also has a heavy metal content, the heavy metal content is at least 1 mg/L, relative to the total volume of the crude pyrolysis oil. In one embodiment, the crude pyrolysis oil has a heavy content of 1 mg/L to 3 mg/L, or 1 to 4 mg/L relative to the total volume of the crude pyrolysis oil.

### Step (i)

In a first embodiment of the purification process according to the invention, the crude pyrolysis oil is treated with a trapping (a) which is an elemental metal of groups 1, 2, 6, 7, 8, 9, 10, 11, 12, 13 of the IUPAC periodic table of elements or a mixture thereof or an alloy thereof. Amongst these, more preference is given to those, wherein the trapping agent (a) is an elemental metal selected from groups 1, 2, 6, 8, 9, 10, 11, 12 or 13 of the IUPAC periodic table of elements or a mixture thereof or an alloy thereof. Preferred metals of group 1 include lithium, sodium and potassium. Preferred metals of group 2 include calcium and mganesium. A preferred metal of group 8 is iron. A preferred metal of group 12 is zinc. Preferred metals of group 13 include aluminum and boron. Especially prefered trapping agents (a) are sodium, magnesium, aluminum, boron and iron but also lithium, potassium, calcium and zinc and the alloys thereof. Suitable alloys are in particular alloys of alkali metals. Especially preferred are sodium, calcium, magnesium, aluminum or boron, in particular sodium.

In some embodiments, especially with less reactive metals such as such as calcium, aluminum, iron or zinc, it may be advantageous to carry out the treatment in the presence of a further trapping agent, especially a trapping agent (b) or a trapping agent (d). Suitable trapping agents (b) include an oxide of metals of groups 6, 7, 8, 9, 10, 11 or 12 of the IUPAC periodic table of elements or a mixture thereof, in particular manganese oxide, nickel oxide, cobalt oxide, iron(III) oxide, copper oxide and zinc oxide. An example for the trapping agent (d) includes zeolite.

The trapping agent (a) is used in an at least stoichiometric quantity, preferably in a hyperstoichiometric quantity which is related to the sulfur, nitrogen, halogen content present in the crude pyrolysis oil. For example, the amount of the trapping agent (a) is 0.1 to10 times the required stoichiometrically amount, preferably 0.5 to 5 times the required stoichiometrically amount.

A stoichiometric quantity of the trapping agent (a) is meant to be one equivalent of elemental metal per mole of halogen, two equivalents of elemental metal per mole of sulfur, and three equivalents of elemental metal per mole of nitrogen.

The treatment can be effected continuously or batchwise. The amount of trapping agent (a) in relation to the total amount of crude pyrolysis oil is often in the range of 0.01 to 10% by weight, preferably 0.02 to 5% by weight and in particular 0.03 to 3% by weight in a batch process. In a continuous process, the amount of trapping agent (a) in relation to the total amount of crude pyrolysis oil is often in the range from 0.01 to 50% by weight, preferably 0.02 to 40% by weight, and in particular 0.03 to 30% by weight. Particularly in the continuous process, it may be advantageous to arrange several reactors in series to achieve the depletion as hight as possible.

If used together with the trapping agent (a), the trapping agent (b), if applicable, is often used in an amount of 0.01 to 10% by weight, preferably 0.02 to 5% by weight and in particular 0.03 to 3% by weight, in relation to the total amount of crude pyrolysis oil, in a batch process. If used together with the trapping agent (a), the trapping agent (b), if applicable, is often used in an amount of from 0.01 to 50% by weight, preferably 0.02 to 40% by weight, and in particular 0.03 to 30% by weight, in a continuous process The trapping agent (d), if applicable, is used in an amount of up to 10% by weight, based on to the total amount of crude pyrolysis oil.

The trapping agent(s) may be added to the crude pyrolysis oil in a single portion or in partial portions.

It may be advantageous to disperse the trapping agent (a) and, if present, the trapping agent (b) and/or trapping agent (d) throughout the crude pyrolysis oil so that an intimate contact between the trapping agent(s) and the crude pyrolysis oil can take place. As an example, sodium may be used in form of a dispersion in mineral oil. A finely divided sodium metal dispersion may consists of particles of one micron or less in size is used.

It may be advantageous to carry out the treatment under inert atmopshere such as an atmopshere of nitrogen or argon.

The treatment can be carried out in the absence or presence of a solvent such as mineral oils or hydrocarbons different from mineral oils. For example, the treatment can be carried out in the presence of naphtha.

The treatment is typically carried out at a temperature in the range from 200 to 500°C, preferably in the range from 250 to 300°C.

The residence time is generally from 0.1 to up to 20 hours, preferably up to 10 hours, such as 0.2 to 10 hours, more preferably up to 5 hours such as 0.2 to 5 hours.

This step is typically carried out at a pressure of 0.9 to 1.1 atm, preferably 0.95 to 1.05 atm, preferably 1 atm. This step may also be carried out at elevated pressure, such as 1.11 atm to 3 atm. Preferably, the treatment is carried out at atmospheric pressure.

Once the treatment with the metal or metal alloy is finished, excess metal or alloy can be destroyed by the addition of a hydrogen donor, such as water which may be acidic or basic. The product from step (i) is subjected to a separation step, to separate the solids.

Without wishing to be bound to any theory, it is believed that the elemental metal (or alloy) reacts with the sulfur, nitrogen, halogen content and, if present, heavy-metal content in the pyrolysis oil to form one or more inorganic products. The inorganic products as well as the organic purified pyrolysis oil may then be separated in the next step. In case that the elemental metal is an alkali metal or alkali earth metal, the metal may be recovered from the inorganic products, e.g. as described in US 7,897,028 or US 2013/0043160.

A conventional heated reactor may be employed for batchwise treatment of small batches. It is also possible to integrate this treatment within a continuous process or for these small batch operations.

In a second embodiment of the purification process according to the invention, the crude pyrolysis oil is treated with a trapping (b) which is an oxide of metals of group 1, 2, 6, 7, 8, 9, 10, 11, 12, 13 of the IUPAC periodic table of elements or a mixture thereof. In the context of the present invention, the term "a mixture of oxides of metals of group 1, 2, 6, 7, 8, 9, 10, 11, 12, 13 of the IUPAC periodic table of elements" includes a mixture of individual metal oxides, as well as mixed oxides and composite oxides.

Preferably, the treatment is carried out in the presence of hydrogen at elevated temperature and elevated pressure. The temperature is typically in the range from 100 to 500°C, preferably 150 to 300°C. The treatment is usually carried out at a hydrogen partial pressure in the range from 5 to 500 bar, preferably 20 to 150 bar, more preferably 20 to 100 bar. If the hydrogen partial pressure is less than about 3 bar, coke is more actively produced on the trapping agent. On the contrary, if the hydrogen partial pressure is higher than 500 bar, the construction cost for a reactor or peripheral facilities may be increased and is thus economically infeasible. The residence time is generally from 0.1 to up to 20 hours, preferably up to 10 hours, such as 0.2 to 10 hours, more preferably up to 5 hours such as 0.2 to 5 hours.

In the second embodiment, the trapping agent (b) is preferably an oxide of metals of Group 2, 6, 7, 8, 9, 10, 11, 12, 13 of the IUPAC periodic table of elements or a mixture thereof.

A suitable metal oxide of group 2 is calcium oxide. Suitable metal oxides of group 6 are the oxides of chromium, molybdenum and tungsten, such as chromium (III) oxide, molybdenum(VI) oxide and tungsten (VI) oxide. A suitable metal oxide of group 7 is manganese oxide. A suitable metal oxide of group 8 is iron(III) oxide. A suitable metal oxide of group 9 is cobalt oxide such as cobalt(II) oxide. Suitable metal oxide of group 10 are the oxides of nickel and palladium such as nickel(II) oxide and palladium(II) oxide. A suitable metal oxide of group 11 is copper(II) oxide. A suitable metal oxide of group 12 is zinc(II) oxide. In a preferred embodiment, the trapping agent (b) includes one metal oxide of group 2, 6, 8, 9, 10, 11, 12, 13 for example calcium oxide, nickel oxide, copper oxide or zinc oxide.

Likewise preferred are mixed metal oxides, for example the mixed oxides of Co-Mo, Ni-Mo, Ni-Cu, Cu-Zn, Cu-Cr, Mo-Co or Cu-Co-Mo-Mn.

The trapping agent (b) may be either self-supporting, i.e., the trapping agent does not need another material to serve as a support (or carrier), or needs a support. The support typically comprises solid substances with high porosity. Particularly beneficial supports include alumina, especially in the gamma or etha form, silica, silica-alumina, titania, zinc oxide and zirconia. The support may also include a zeolitic compound. The trapping agent may include a binder to assist in forming the trapping agent into a desirable shape such as balls, rings or otherwise formed shapes.

It is envisaged that in the presence of hydrogen the metal oxide or composite metal oxide is partially reduced to an activated metal species at the reaction temperature. This is particularly true for oxides of a metal selected from group 6, 7, 8, 9, 10, 11 or 12 of the periodic table of elements or composite oxides thereof. The generated activated metal can cleave carbon-sulfur, carbon-nitrogen and/or carbon-halogen bonds. Sulfur, nitrogen and/or halogen are captured by the activated metal or the oxide, e.g. by formation of metal sulfides and/or metal halides. In contrast to a catalytic hydrotreatment, essentially no hydrogen sulfide, hydrogen halogenide or ammonia are generated.

Alternatively, the metal cations of strongly basic metal oxides such as metal oxides of group 1 or 2 of the IUPAC periodic table of elements, e.g., calcium oxide, may directly react with nitrogen, sulfur and halogen heteroatoms of the nitrogen-containing, sulfur-containing and halogen-containing compounds present in the crude pyrolysis oil resulting in the intermediate formation of unsaturated compounds. Hydrogen serves to hydrogenate unsaturated compounds.

The second embodiment may be carried out batchwise or continuously. The second embodiment is usually carried out in a suitable reactor, such as a stirred autoclave. The trapping agent may be used either in fixed bed or mobile form, for example in a fluidized bed reactor. Also suitable are reactors with one or more trapping agent beds of identical compositions, or several trapping agent beds, the composition of the trapping agent beds being different from one bed to another. In addition, a trapping agent bed may optionally be composed of different trapping agent layers.

The trapping agent (b) is typically used in an at least stoichiometric quantity, preferably in a hyperstoichiometric quantity which is related to the sulfur, nitrogen, halogen content and, if present, heavy metal content, present in the crude pyrolysis oil. The amount of trapping agent (b) in relation to the total amount of crude pyrolysis oil is often in the range of 0.01 to 10% by weight, preferably 0.02 to 5% by weight and in particular 0.03 to 3% by weight in a batchwise process. In a continuous process, the amount of trapping agent (b) in relation to the total amount of crude pyrolysis oil is often in the range from 0.01 to 50% by weight, preferably 0.02 to 40% by weight, and in particular 0.03 to 30% by weight. Particularly in the continuous process, it may be advantageous to arrange several reactors in series to achieve the depletion as hight as possible.

A stoichiometric quantity of the trapping agent (b) is meant to be one equivalent of metal cation per mole of halogen, two equivalents of metal cation per mole of sulfur, and three equivalents of metal cation per mole of nitrogen.

In a third embodiment, the crude pyrolysis oil is subjecting to a treatment with a trapping agent (c) selected from alkoxides of group 1, 2 of the IUPAC periodic table of elements and combinations thereof. Among these preference is given to alkali metal or alkaline earth metal alkanolates having 1 to 20 carbon atoms, alkali metal or alkaline earth metal cycloalkoxides having 5 to 20 carbon atoms or a mixture thereof. Suitable alkali metals include sodium and potassium, suitable alkaline earth metals include calcium and magnesium.

Alkanols suitable for preparing the metal alkoxides are compounds of formula R-OH in which R is a linear or branched C₁-C₂₀-alkyl group. Examples include methanol; ethanol; n-propanol, isopropanol; n-butanol, iso-butanol, sec-butanol, tert-butanol; 1-, 2-, 3-pentanol, iso-pentanol, tert-pentanol, neo-pentanol, 2-methyl-1-butanol, 3-methyl-2-butanol; 1-, 2-, and 3-hexanol; 1, 2-, 3-, and 4-heptanol; 1-, 3-, and 4-octanol; 1-, 2-, 3-, 4-, and 5-nonanol; 1-, 2-, 3-, 4-, and 5-decanol; 1-, 2-, 3-, 4-, 5-, and 6-undecanol; 1-, 2-, 3-, 4-, 5-, and 6-dodecanol; 1-, 2-, 3-, 4-, 5-, 6-, and 7-tridecanol; 1-, 2-, 3-, 4-, 5-, 6-, and 7-tetradecanol (myristyl alcohol); 1-, 2-, 3-, 4-, 5-, 6-, 7-, and 8-pentadecanol; 1-octadecanol (stearyl alcohol), 2-, 3-, 4 -, 5-, 6-, 7-, 8-, and 9-octdecanol; 1-, 2-, 3-, 4-, 5-, 6-, 7-, 8-, 9- and 10-nonadecanol; and 1-, 2-, 3-, 4-, 5-, 6-, 7-, 8-, 9- and 10-eicosanol; and branched isomers of these and of the homologs. Alcohols suitable for preparing the alkali metal cycloalkoxides and alkaline earth metal cycloalkoxides include, for example, cyclopentanol, cyclohexanol, cycloheptanol, cyclooctanol, cyclononanol, cyclodecanol, cycloundecanol, cyclododecanol, cyclotridecanol, cyclotetradecanol, cyclopentadecanol, cyclohexadecanol, cycloheptadecanol, cyclooctadecanol, cyclonoadecanol, and cycloeicosanol; and alkylated derivatives of these cycloaliphatic compounds. Also suitable are hydrogenated naphthols etc.

Preferably, the metal alkoxide is a sodium or potassium alkoxide having 1 to 6 carbon atoms, in particular 1 to 5 or 1 to 4 carbon atoms. Among these, preference is given to sodium methoxide (also referred to as sodium methanolate, sodium methylate), potassium methoxide, sodium ethoxide, potassium ethoxide, sodium tert-butoxide, potassium tert-butoxide, sodium tert-pentoxide and potassium tert-pentoxide.

The alkoxides may be prepared by any known method; for example (i) by treating the required absolute alcohol with a metal in question; (ii) by treating a metal hydroxide in question with a required absoulte alcohol with azeotropic distillation and removal of the water present at equilibrium; or (iii) by reacting a lower alcoholate with a higher alcohol in question followed by distilling off of the lower alcohol. The preparation may also be carried out in situ, in the presence of the crude pyrolysis oil.

It may be advantageous to carry out the reaction under inert atmopshere such as an atmopshere of nitrogen or argon.

The treatment can be carried out batchwise or continuously.

The stoichiometrically required amount of the metal alkoxide is based on the nitrogen, sulfur, halogen content and, if present, the heavy metal content. It may be advantageous to use the metal alkoxide in an excess based on the total nitrogen, sulfur and halogen content and, if present, heavy metal content of the crude pyrolysis oil. For example, the amount of the metal alkoholate is 0.1 to 20 times the required stoichiometrically amount, preferably 0.5 to 10 times the required stoichiometrically amount. The amount of trapping agent (c) in relation to the total amount of crude pyrolysis oil is often in the range of 0.01 to 10% by weight, preferably 0.02 to 5% by weight and in particular 0.03 to 3% by weight in a batchwise process. In the continuous process, the amount of trapping agent (c) in relation to the total amount of crude pyrolysis oil is often in the range from 0.01 to 50% by weight, preferably 0.02 to 40% by weight, and in particular 0.03 to 30% by weight. Particularly in the continuous process, it may be advantageous to arrange several reactors in series to achieve the depletion as hight as possible.

The residence time is generally from 0.1 to up to 20 hours, preferably up to 10 hours, such as 0.2 to 10 hours, more preferably up to 5 hours such as 0.2 to 5 hours.

The treatment can be carried out in the absence or presence of a solvent such as the corresponding alcohol of the alcoholate used. In an embodiment, the metal alkoxide is present in the form of a solution in an alcohol, preferably in an amount of between 10 to 50 wt.-%, preferably between 20 and 40 wt.-% or between 25 and 35 wt.-%, wherein the percentage is a weight percentage based on the total weight of the solution. This solution is either prepared freshly or commercially obtained.

The treatment is typically carried out at a temperature in the range from 100 to 500°C or 140 to 500°C, preferably in the range from 150 to 300°C. This step may be carried out at a pressure of 0.9 to 1.1 atm, preferably 0.95 to 1.05 atm, preferably 1 atm. This step may also be carried out at elevated presure, such as 1.11 atm to 30 atm. Preferably, the treatment is carried out at atmospheric pressure.

A conventional heated reactor may be employed for batchwise treatment of small batches. This treatment may be integrated within a continuous process or in small batch operations as well.

When the reaction is completed, excess alkoxide may be destroyed by the addition of water which may be acidic or basis, preferably by the addition of a mineral acid such as sulfuric acid.

Without wishing to be bound to any theory, it is believed that the metal alkoxide reacts with the sulfur, nitrogen, halogen content and, if present, heavy-metal content in the pyrolysis oil to form one or more inorganic and organic products. The inorganic and organic products, may be separated in the next step.

In a fourth embodiment, the crude pyrolysis oil is treated with a solid trapping agent (d), i.e., the crude pyrolysis oil is brought into physical contact with a solid sorption agent selected from activated carbon, alumina, silica, clay materials, zeolites, ion exchange resins, absorbent organic polymers, wherein a treated pyrolysis oil and a laden sorption agent are obtained. The aforementioned trapping agents (d) may be used in combination of two or more. For example, two different trapping agents (d) may be charged in an adsorption column in series.

The sorption agent includes adsorption agents and absorption agents. Accordingly, the solid sorption agent has a primary and basic function of adsorbing or absorbing at least partly the nitrogen, sulfur, halogen and, if present, the heavy metal content of the crude pyrolysis oils. The nitrogen-containing, sulfur-containing, halogen-containing and, if present, heavy metal containing compounds may be removed either by physiosorption and/or chemisorption from the crude pyrolysis oil. In the case of physisorption the nitrogen-containing, sulfur-containing, halogen-containing, and if present, heavy-metal containing compounds may be adsorbed onto the surface of the solid sorption agent by relatively weak forces such as van der Waals forces or electrostatic forces. In the case of chemisorption, the nitrogen-containing, sulfur-containing, halogen-containing, and if present, heavy-metal containing compounds may be adsorbed onto the surface of the sorption agent by a weak chemical bond formed between said compounds and the solid surface of the sorption agent so that the electronic configuration of the adsorped compound is changed.

In one embodiment, the solid sorption agent is activated carbon. The activated carbon may be powdered or granula carbon. The activated carbon often has a diameter in the range from 0.1 to 1.5 mm, such as 0.5 to 1.0 mm. It typcially has a high specific surface area, e.g. about 300 to 2000 m²/g. It also typically has a well defined microporous structure, e.g. an average pore size of about 1.5 nm. In one embodiment, metals such as copper and iron may be incorporated into the activated carbon. Preferred examples include activated carbon having a diameter in the range from 0.1 to 1.5 mm, activated carbon GPP-20®, available from Chemviron, Belgium and granular activated carbon. Examples also include the commercial activated carbon samples described in table 1 on page 953 in Ind. Eng. Chem. Res., vol. 48, no. 2, 2009. The activated carbon can be fresh activated carbon or a re-activated carbon such as ReSorb SC®, available from Jacobi carbon.

In another embodiment, the solid sorption agent is alumina. The alumina may be acidic or neutral in nature.

In another embodiment, the solid sorption agent is silica. An example is Perlkat®, e.g. the silica pellets Perlkat® 97-0 or Perlkat® 79-3 commercially available from BASF SE, Germany. Another example is silica gel gel with a pore size of 60 Å (0.040-0.063 mm), available from Merck.

In another embodiment, the solid sorption agent is a clay mineral. Suitable clay minerals include kaolin, kaolinite, bentonite, smectite, montmorillonite, hectorite, attapulgite and Fuller's earth. Among these, preference is given to bentonite, kaolin, kaolinite and montmorillonite.

In another embodiment, the solid sorption agent is a zeolite. Zeolites are crystalline aluminosilicate of alkali or alkali earth metals which are microporous and which are formed from corner sharing AlO₂ and SiO₂ tetrahedra. Metals like Ag⁺, Cu⁺, Ni²⁺ and Zn²⁺ may be incorporated into the zeolite. A commercially available zeolite is Siral®, especially Siral® 40, available from Sasol, Germany.

In another embodiment, the solid sorption agent is a ion-exchange resin. In one embodiment, the ion exchange resin is an acidic cationic exchanger. Preferably, the ion-exchange resin is a polystyrene sulfonic acid resin catalyst resin, such as Amberlyst® 15 or Amberlyst® 35, available from Dow Chemicals.

In another embodiment, the solid sorption agent is an absorbent organic polymer. Suitable polymers include functionalized poly(glycidylmethacrylate)-based particles such as poly(glycidyl methacrylate) (PGMA) based polymers functionalized with a pi-acceptor such as 2,4,5,7-tetranitrofluorenone (TENF) as described in Energy &Fuels, 2015, 29, 1881-1891 (DOI: 10.10217ef502210z).

According to the invention, the shape form of the sorption agent is not critical. For example, the soprtion agent may be of any of granular, spherical and particulate shapeor may be a powder. The trapping agent (d) can be layered, mixed in adsorbent beds, or used in pure form in separate adsorbent beds.

The trapping agent (d) is added to the crude pyrolysis oil in a batch or continuous process to provide an amount of trapping agent (d) in the range of 0.01 to 10% by weight, preferably 0.02 to 5% by weight and in particular 0.03 to 3% by weight in a batchwise process. In the continuous process, the amount of trapping agent (d) in relation to the total amount of crude pyrolysis oil is often in the range from 0.01 to 50% by weight, preferably 0.02 to 40% by weight, and in particular 0.03 to 30% by weight. Particularly in the continuous process, it may be advantageous to arrange several reactors in series to achieve the depletion as hight as possible.

The solid sorbent agent can be freestanding, mixed with or supported on inert porous substrates, such as silica (SiO₂), alumina (Al₂O₃), carbon, and the like.

Contacting with the solid sorption agent may be under batch or continuous conditions, employing fixed or fluidized beds of sorption agent, under either concurrent or countercurrent flow conditions, as appropriate. The preferred mode of effecting the contacting is passing a stream of liquid feed through a fixed bed of sorption agent. A two-bed system is desirable for a continuous production, with one bed adsorbing/absorbing while the other is being regenerated. The adsorbent beds can be operated at 15 to 35°C, such as ambient temperature or at elevated temperature up to boiling temperature of the pyrolysis oil as required. The treatment is typically carried out at a pressure of 0.9 to 1.1 atm, preferably 0.95 to 1.05 atm, preferably 1 atm.

Following step (i), the sorbed material may be removed by the use of a selected desorbent to regenerate the trapping agent (d). This desorbent is a material which is capable of displacing the sorbate components of the crude pyrolysis oil. For example, the sorption agent may be regenerated by using polar solvents such as C₁-C₆-alkanols. Amberlyst resins may be regenerated with acids, activated carbon may be regenerated by thermal treatment using hot steam or nitrogen.

The aforementioned sorption agents may be used in combinations of two or more, for example a treatment with an ion-exchange resin may be followed by the treatment with a sorption agent other than a ion-exchange resin.

After treatment, the trapping agent, i.e., trapping agent (a), trapping agent (b), trapping agent (c), trapping agent (d) and, if applicable, any used combination thereof, can remain in the reactor to be reused or discharged with the product obtained in step (i). If discharged, they must be separated off, before the purified pyrolysis oil fraction having a reduced nitrogen, sulfur and halogen content in relation to the crude pyrolysis oil can be used.

### Step (ii)

The product obtained from step (i) is separated into a purified pyrolysis oil fraction having a reduced nitrogen, sulfur and halogen content in relation to the crude pyrolysis oil and a fraction comprising the trapping agent which has bound at least a part of the sulfur, nitrogen and halogen present in the crude pyrolysis oil. In particular, step (ii) includes a filtration, extraction, distillation, membrane separation or a combination thereof.

In general, the trapping agents agents (a) or (b) which have bound at least a part of the sulfur, nitrogen and halogen present in the crude pyrolysis oil, as well as excess trapping agent can be separated by centrifugation. Likewise, they can be separated off by filtration from a lighter organic phase bearing or consisting of the purified pyrolysis oil.

A further embodiment includes an extraction, preferably a liquid-liquid extraction. The obtained product is extracted with a polar solvent to give a first phase (extract) enriched in the sulfur, nitrogen, halogen and, if present, heavy metal content and a second phase (raffinate) comprising the purified pyrolysis oil having a reduced sulfur, nitrogen, halogen and, if present, heavy metal content in relation to the crude pyrolysis oil. Polar means that the solvent molecule has a large dipole moment, with bonds between atoms of very different electronegativity, such as oxygen and hydrogen. This is advantageous, since the treated pyrolysis oil has little to no dipole moment.

Suitable polar solvents include all solvents that have the necessary solubilization characteristics to dissolve sulfur-containing, nitrogen-containing, halogen-containing and, if present heavy metal containing, compounds. Preferably, the polar solvent is selected from water, acidic aqueous solutions, basic aqueous solutions, water-miscible organic solvents and mixtures thereof. Examples of inorganic polar solvents are water, inorganic acidic aqueous solutions and inorganic basic aqueous solutions. Inorganic acidic aqueous acids include diluted mineral acids such as sulfuric acid, phosphoric acid and hydrochloric acid. Inorganic basic solutions include an aqueous solution of an alkali metal or alkaline earth metal hydroxide, an alkali metal or alkaline earth metal hydrogencarbonate and an alkali metal or alkaline earth metal carbonate such as an aqueous solution of sodium hydroxide, sodium hydrogencarbonate, sodium carbonate, potassium hydroxide, potassium hydrogencarbonate, potassium carbonate, calcium hydroxide, calcium hydrogencarbonate and calcium carbonate. Examples of organic polar solvents include an aqueous solution of an organic C₁-C₁₀ alkane carboxylic acid such as acetic acid or propionic acid, a nitrile such as acetonitrile, saturated ketone such as acetone, dichloromethane, ether such as 1,4-dioxane, tetrahydrofuran, C₁-C₆-alkylamides and di-C₁-C₆-alkylamides of saturated C₁-C₆-monocarboxylic acids, e.g. N,N-dimethylformamide, N,N-dimethylacetamide, lactam such as N-methylpyrrolidinone or C₁-C₆-alkanol such as methanol, ethanol and the like.

Typically, the product obtained in step (i) is extracted one or more times with the selected solvent and the raffinates are combined.Extraction is particularly suitable when the trapping agent is a trapping agent (a), in particular a metal of group 1 or 2 or a trapping agent (c).

In another embodiment, the product obtained in step (i) is subjected to a membrane separation to obtain the a purified pyrolysis oil which has a reduced nitrogen, sulfur and halogen content in relation to the crude pyrolysis.

In another embodiment, the product obtained in step (i) is subjected to a distillation at an elevated temperature to obtain a bottom product that is a pyrolysis oil enriched in the less volatile components and enriched in the sulfur, nitrogen and halogen content (and if present also in the heavy metal content) and also contains the trapping agent; and a gaseous overhead product that is a pyrolysis oil enriched in the more volatile components and depleted in the sulfur, nitrogen and halogen content (and, if present, also depleted in the heavy metal content). The obtained gaseous overhead product is cooled and may be subjected to at least one further distillation to obtain more valuable cuts. The distillation is typically carried out at a pressure of 0.9 to 1.1 atm, preferably 0.95 to 1.05 atm, preferably 1 atm. In some embodiments, it may be advantageous to carry out the destillation at reduced pressure. The distillation is typically carried out at temperatures at 100°C or higher, for example at 100 to 400°C.

Preferably, the distillation is a fractional distillation.

A fraction having a boiling temperature of less than 350°C, such as less than 340°C or less than 320°C or less than 300°C or less than 250°C, especially less than 200°C, at atmopsheric pressure is preferably fed into a (steam) cracker to obtain valuable hydrocarbons.

The bottom product may be cracked and used again as feed.

The pyrolysis oil obtained according to the processes described above usually has a sulfur content at least 40% lower, more preferably at least 50% lower, than that of the untreated crude pyrolysis oil.

The pyrolysis oil obtained according to the processes described above usually has a nitrogen content at least 40% lower, more preferably at least 50% lower, than that of the untreated crude pyrolysis oil.

The pyrolysis oil obtained according to the processes described above usually has a halogen content at least 40% lower, more preferably at least 50% lower, than that of the untreated crude pyrolysis oil.

If present, the pyrolysis oil obtained according to the processes described above usually has a heavy metal content at least 40% lower, more preferably at least 50% lower, than that of the untreated crude pyrolysis oil.

Another aspect relates to the use of a purified pyrolysis oil having a boiling temperature of up to 350°C, preferably up to 200°C obtainable by a process as defined above as feedstock for a (steam) cracker.

Thus, the present invention also relates to a process for the production of hydrocarbon compounds having a lower molecular weight than a pyrolysis oil originating from the pyrolysis of plastic waste, comprising the steps
(i) providing a crude nitrogen-containing, sulfur-containing and halogen-containing pyrolysis oil originating from the pyrolysis of plastic waste;
(ii) subjecting the crude pyrolysis oil to a process as described herein; and
(iii) subjecting the purified pyrolysis oil obtained in step (ii) to a treatment in a (steam) cracker unit and isolating a stream comprising the lower molecular weight hydrocarbon compounds.

Thermal steam cracking as well as catalytic cracking are known methods for producing lower molecular weight hydrocarbon compounds starting from a pyrolysis oil.

The present invention also relates to a process for the production of syngas, comprising the steps
(i) providing a crude nitrogen-containing, sulfur-containing and halogen-containing pyrolysis oil originating from the pyrolysis of plastic waste;
(ii) subjecting the crude pyrolysis oil to a process as described herein; and
(iii) subjecting the purified pyrolysis oil obtained in step (ii) to a partial oxidation to produce syngas.

In the context of the present invention, syngas, which is also known as synthesis gas, is a mixture of gases comprising as main components carbon monoxide (CO) and hydrogen (H₂). A fraction having a boiling temperature of 200°C or more, preferably 350°C or more, at atmospheric pressure is preferably subjected to a partial oxidation in step (iii). In particular, purified pyrolysis oil having a boiling point of more than 200°C may be converted to syngas. The pyrolysis oil obtained in step (ii) is partially oxidized with oxygen (O₂), air, steam (H₂O), or a combination of all gasification agents at elevated temperature, often in the range from 800 to 1000°C and at a pressure in the range from 1 to 20 bar. The syngas obtained in stp (iii) can be converted into alkanes, olefins, oxygenates, and alcohols such as ethanol. These chemicals can be blended into, or used directly as, diesel fuel, gasoline, and other liquid fuels. Syngas can also be directly combusted to produce heat and power.

Thus, another aspect relates to the use of a purified pyrolysis oil having a boiling temperature of more than 200°C, preferably more than 350°C obtainable by a process as defined herein as feedstock for a partial oxidation unit to produce syngas.

The invention will be described in more details by the subsequent examples.

### EXAMPLES

Abbreviations: Ex. means example; hr(s) means hour(s); c.p.o. means crude pyrolysis oil; r.t. means room temperature (ambient temperature); T means temperature; wt.-% means weight percent.

### Starting material:

Crude pyrolysis oils with varying nitrogen, sulfur and chlorine contents were used as feedstock. Crude pyrolysis oils were prepared in analogy to the process described in EP 0713906.

The following crude pyrolysis oils were used:
- pyrolysis oil 1 having a sulfur content of 60 mg/L, a nitrogen content of 830 mg/L and a chlorine content of 150mg/L,
- pyrolysis oil 2 having a sulfur content of 900 mg/L, a nitrogen content of 1800 mg/L and a chlorine content of 185 mg/L,
- pyrolysis oil 3 having a sulfur content of 100 mg/L, a nitrogen content of 730 mg/L and a chlorine content of 530 mg/L.

### Product analyses:

The total sulfur content was determined in accordance with EN ISO 2084.
The total nitrogen content was determined in accordance with DIN 51444.
The chlorine content was determined in accordance with ASTM D 5808, and bromides and iodides, if present, will be calculated as chlorides.
The Saybolt color standard was determined in accordance with ASTM D 6045-9.

### I. Treatment with trapping agent (a) followed by extraction

### Example 1 (batch set-up): using sodium

Pyrolysis oil (20 g) and sodium (20% by weight in mineral oil, 1 g, 8.7 mmol, corresponding to 0.2 g of elemental sodium) were loaded into an autoclave reactor. The reactor was closed and then heated to 280°C, while simultaneously purging with nitrogen. The temperature was held for one hour. The reaction mixture was then cooled down and then filtered. A part of the filtrate was extracted with the extractants shown in table 1 to yield an organic phase containing the pyrolysis oil depleted in organic sulfur, nitrogen and chlorine compounds. Table 1 presents the sulfur, nitrogen and chlorine content of the crude and purified pyrolysis oil.

**Table 1:**

| Ex. | | S [mg/L] | N [mg/L] | Halogen [mg/L] |
|---|---|---|---|---|
| | crude pyrolysis oil | 60 | 830 | 150 |
| 1a | water extraction | less than 1 | 25 | less than 1 |
| 1b | extraction with 5 wt.-% H₂SO₄ | less than 1 | 20 | less than 1 |

### Example 2 (batch set-up): using sodium

Example 2 was performed by the protocol of example 1, except for the following: the autoclave reactor was charged with 35 g of pyrolysis oil and 0.3222 g of sodium (20% by weight in mineral oil), and the reaction mixture was held at 280°C for 2 hours. Aliquots of the filtrate were extracted with the extractants listed in table 2 (water, water with 5 wt.-% H₂SO₄, 5 wt.-% HCl, and 5 wt.-% acetic acid, respectively), to yield an organic phase containing the pyrolysis oil depleted in organic sulfur, nitrogen and chlorine compounds. Table 2 presents the sulfur, nitrogen and chlorine content of the crude and purified pyrolysis oil.

**Table 2:**

| Ex. | | S [mg/L] | N [mg/L] | Halogen [mg/L] |
|---|---|---|---|---|
| | crude pyrolysis oil | 60 | 830 | 150 |
| 2a | water extraction | 7 | 130 | less than 0.5 |
| 2b | extraction with 5 wt.-% H₂SO₄ | 7 | 65 | less than 0.5 |
| 2c | extraction with 5 wt.-% HCl | 7 | 55 | 1 |
| 2d | extraction with 5 wt.-% CH₃COOH | 7 | 85 | less than 0.5 |

### Example 3 (batch set-up): using sodium

Example 3 was performed by the protocol of example 1, except for the following: the autoclave reactor was charged with 35 g of pyrolysis oil and 0.782 g of sodium (20% by weight in mineral oil), and the reaction mixture was held at 280°C for 2 hours. Aliquots of the filtrate were extracted with the extractants (water, and water with 5 wt.-% H₂SO₄) listed in table 3 to yield an organic phase containing the pyrolysis oil depleted in organic sulfur, nitrogen and halide compounds. Table 3 presents the sulfur, nitrogen and halide content of the crude and purified pyrolysis oil.

**Table 3:**

| Ex. | | S [mg/L] | N [mg/L] | Halogen [mg/L] |
|---|---|---|---|---|
| | crude pyrolysis oil | 900 | 1800 | 185 |
| 3a | water extraction | 220 | 320 | 2 |
| 3b | extraction with 5 wt.-% H₂SO₄ | 220 | 220 | 2 |

### Example 4 (batch set-up): using magnesium

Example 1 was repeated, but using 0.13 g of magnesium instead of 0.2 g of sodium and the reaction mixture was held at 280°C for 2 hours. An analytical sample was filtered and extracted with water to yield an organic phase containing the pyrolysis oil depleted in organic sulfur, nitrogen and halide compounds. Table 4 presents the sulfur, nitrogen and halide content of the crude and purified pyrolysis oil after extraction with water.

**Table 4**

| | S [mg/L] | N [mg/L] | Halogen [mg/L] |
|---|---|---|---|
| crude pyrolysis oil | 60 | 830 | 150 |
| water extraction | 40 | 570 | 40 |

### II. Treatment with trapping agent (a) followed by distillation

### Example 5:

A sodium treated pyrolysis oil, that was obtained in analogy to the protocol of examples 1-3, was distilled at atmospheric pressure to give a fraction having a boiling temperature up to 180°C and a further fraction having a boiling temperature in the range from 180 to 200°C and a residue (sump). The S, N and halogen content is given in table 5.

**Table 5:**

| | S [mg/L] | N [mg/L] | Halogen [mg/L] |
|---|---|---|---|
| Sodium treated pyrolysis oil | 14 | 90 | less than 1 |
| Fraction up to 180°C (24.2 g) | 10 | 25 | 2 |
| Fraction 180-200°C (4.6g) | 12 | 35 | less than 1 |
| Sump (80.4 g) | 14 | 125 | less than 1 |

### III. Treatment with a trapping agent (c) and extraction with water

### Example 6:

### General procedure:

The crude pyrolysis oil was heated either in an autoclave reactor or in a flask under nitrogen in the presence of a large excess of alkoxide and at a temperature as given in tables 6, 7 and 8. The alkoxide was used as a 30 wt.-% solution in the corresponding alcohol except of potassium tert-butoxide that was use as powder. An analytical sample was extracted with water and characterized.

**Table 6:**

| Ex. | | | | | S [mg/L] | N [mg/L] | Halogen [mg/L] |
|---|---|---|---|---|---|---|---|
| | Pyrolysis oil (crude) | | | | 60 | 830 | 150 |

| | c.p.o. | Trapping agent (c) | T [°C] | Time [hrs] | | | |
|---|---|---|---|---|---|---|---|
| 6a | 20 g | C₂H₅ONa 1 mmol | 280 (autoclave) | 1 | 35 | 540 | 7 |
| 6b | 35 g | CH₃ONa 1 mmol | 280 (autoclave) | 2 | 35 | 680 | 9 |

**Table 7:**

| Ex. | | | | | S [mg/L] | N [mg/L] | Halogen [mg/L] |
|---|---|---|---|---|---|---|---|
| | Pyrolysis oil (crude) | | | | 70 | 950 | 80 |

| | c.p.o. | Trapping agent (c) | T [°C] | Time | | | |
|---|---|---|---|---|---|---|---|
| 6c | 10 g | C₂H₅ONa 0.3 mmol | 180 (flask) | 1 hr | 40 | 550 | 28 |
| 6d | 20 g | C₂H₅ONa 0.9 mmol | 290 (autoclave) | 1 hr | 35 | 550 | 4 |

**Table 8:**

| Ex. | | | | | S [mg/L] | N [mg/L] | Halogen [mg/L] |
|---|---|---|---|---|---|---|---|
| | Pyrolysis oil (crude) | | | | 60 | 830 | 150 |

| | c.p.o. | Trapping agent (c) | T [°C] | Time | | | |
|---|---|---|---|---|---|---|---|
| 6e | 10mL | (CH₃)₃COK 0.42 mmol | 160 | 1 hrs | 40 | 530 | 30 |
| 6f | 10mL | (CH₃)₃COK 0.84 mmol | 160 | 1 hrs | 35 | 490 | 45 |
| 6g | 10mL | C₂H₅ONa 0.9 mmol | 160 | 1 hrs | 28 | 380 | 17 |
| 6h | 10mL | C₂H₅ONa 0.9 mmol | 160 | 2 hrs | 30 | 370 | 20 |
| 6i | 10mL | C₂H₅ONa 1.8 mmol | 160 | 1 hrs | 30 | 340 | 25 |
| 6k | 10mL | CH₃ONa 4.4 mmol | 160 | 1 hrs | 30 | 400 | 25 |
| 6l | 10mL | CH₃ONa 4.4 mmol | 160 | 2 hrs | 30 | 420 | 10 |

### IV. Treatment with a trapping agent (b)

### Example 7:

Oxide catalysts or mixed oxide catalysts supported on inert carriers, as typically used in hydrogenation/dehydrogenation reactions, were used as trapping agents. In a typical experiment, 35 g of pyrolysis oil was heated in an autoclave in the presence of hydrogen and the corresponding trapping agent (b) (15 wt.-%, 5 g). The reaction was then cooled down and the purified oil was filtered to remove the trapping agent. Filtrate was then analyzed showing a reduced amount of sulfur, nitrogen and halogen. The results are compiled in tables 9 and 10.

Oxide catalysts or mixed oxide catalysts of the following metals were used:
Trapping agent (b1): Cu, Co, Mo, Mn
Trapping agent (b2): Cu, Zn
Trapping agent (b3): Ni, Cu
Trapping agent (b4): Cu, Cr
Trapping agent (b5): Zn
Trapping agent (b6): Mo, Co

**Table 9:**

| | | | | | S [mg/L] | N [mg/L] | Halogen [mg/L] |
|---|---|---|---|---|---|---|---|
| | Pyrolysis oil (crude) | | | | 70 | 950 | 80 |

| Ex. | Trapping agent | T [°C] | Time [hrs] | H₂ [bar] | | | |
|---|---|---|---|---|---|---|---|
| 7a | (b1) | 250 | 2 | 50 | 20 | 830 | less than 5 |
| 7b | (b1) | 220 | 2 | 50 | 20 | 800 | 9 |
| 7c | (b1) | 250 | 2 | 100 | 13 | 710 | 2 |
| 7d | (b2) | 180 | 2 | 50 | 50 | 900 | 56 |
| 7e | (b2) | 250 | 2 | 50 | 15 | 130 | 1 |
| 7f | (b2) | 250 | 2 | 100 | 17 | 580 | 2 |
| 7g | (b3) | 250 | 2 | 50 | 10 | 510 | 1 |
| 7h | (b3) | 290 | 2 | 50 | 8 | 500 | less than 0.5 |
| 7i | (b3) | 250 | 2 | 100 | 4 | 430 | less than 0.5 |

**Table 10:**

| | | | | | S [mg/L] | N [mg/L] | Halogen [mg/L] |
|---|---|---|---|---|---|---|---|
| | Pyrolysis oil (crude) | | | | 47 | 710 | 160 |

| Ex. | Trapping agent | T [°C] | Time [hrs] | H₂ [bar] | | | |
|---|---|---|---|---|---|---|---|
| 7k | (b2) | 250 | 1 | 20 | 27 | 450 | 11 |
| 7l | (b2) | 250 | 2 | 50 | 23 | 460 | 8 |
| 7m | (b1) | 250 | 2 | 50 | 15 | 560 | 6 |
| 7n | (b4) | 290 | 2 | 50 | 14 | 440 | 1 |
| 7o | (b4) | 250 | 2 | 50 | 18 | 480 | 2 |
| 7p | (b1) | 290 | 2 | 50 | 12 | 530 | 2 |
| 7q | (b2) | 200 | 2 | 35 | 28 | 470 | 31 |
| 7r | (b1) | 220 | 2 | 50 | 18 | 620 | 5 |
| 7s | (b5) | 250 | 1 | 20 | 35 | 600 | 55 |
| 7t | (b6) | 250 | 2 | 50 | 31 | 240 | 17 |

### Example 8

The protocol of example 7a was repeated, using 35 g of pyrolysis oil and 2.5 g of the trapping agent (b1) instead of 5 g of the trapping agent (b1). The results are compiled in table 11 below.

**Table 11**

| | | | | | S [mg/L] | N [mg/L] | Halogen [mg/L] |
|---|---|---|---|---|---|---|---|
| | Pyrolysis oil (crude) | | | | 100 | 730 | 530 |

| Ex. | Trapping agent | T [°C] | Time [hrs] | H₂ [bar] | | | |
|---|---|---|---|---|---|---|---|
| 8 | (b1) | 250 | 2 | 50 | 9 | 440 | 14 |

### Example 9

The protocol of example 7 was repeated, using 35 g of pyrolysis oil and the trapping agent as indicated in table 12 below.

**Table 12**

| | | | | | S [mg/L] | N [mg/L] | Halogen [mg/L] |
|---|---|---|---|---|---|---|---|
| | Pyrolysis oil (crude) | | | | 900 | 1800 | 185 |

| Ex. | Trapping agent | T [°C] | Time [hrs] | H₂ [bar] | | | |
|---|---|---|---|---|---|---|---|
| 9a | (b1) | 250 | 2 | 50 | 680 | 1400 | 19 |
| 9b | (b2) | 250 | 2 | 50 | 610 | 1100 | 55 |
| 9c | (b1) | 250 | 2 | 50 | 730 | 1400 | 50 |

### Example 10

The protocol of example 7 was repeated in a continous apparatus by employing 2.1 kg of pyrolysis oil, 180 mL of trapping agent (b8), a flow rate of 60 g/hr, T = 250°C and a pressure of H₂ of 50 barr. 2.1 kg of pyrolysis oil were pumped into the system yielding a cleaned feed. The results are compiled in table 13 below.

**Table 13**

| | | | | | S [mg/L] | N [mg/L] | Halogen [mg/L] |
|---|---|---|---|---|---|---|---|
| Hydrogenated Pyrolysis oil (crude) | | | | | 70 | 950 | 80 |

| Ex. | Trapping agent (b) | T [°C] | Time [hrs] | H₂ | | | |
|---|---|---|---|---|---|---|---|
| 10 | (b2) | 250 | 60 g/hr | 50 bar | less than 1 | 220 | less than 0.5 |

### Example 11:

In a typical experiment: 15 g of pyrolysis oil was heated in an autoclave in the presence of hydrogen and an excess of the trapping agent (b) (powder, 5 wt%, 0.75 g) as indicated in table 12. The reaction was then cooled down and the so purified oil was filtered. Filtrate was then analyzed showing reduced amount of sulfur, nitrogen and halogen. The results are compiled in table 14 below.

**Table 14**

| | | | | | S [mg/L] | N [mg/L] | Halogen [mg/L] |
|---|---|---|---|---|---|---|---|
| pyrolysis oil (crude) | | | | | 50 | 960 | 140 |

| Ex. | Trapping agent | T [°C] | Time [hrs] | H₂ [bar] | | | |
|---|---|---|---|---|---|---|---|
| 11a | CuO powder | 250 | 6 | 20 | 22 | 670 | 3 |
| 11b | NiO powder | 250 | 6 | 20 | 22 | 710 | 30 |

### Example 12

The protocol of example 11 was repeated but using CaO instead of CuO to yield a pyrolysis oil comparable depleted in sulfur, nitrogen and halide as in example 12a.

### V. Treatment with a trapping agent (d)

### Example 13

In a typical experiment, 20 g of pyrolysis oil were stirred for 2 hours with a trapping agent (d) and at a temperature specified in table 15 below. When the trapping agent is in form of bead particles, the obtained suspension was filtered over paper filter, whereas when the sorption agent is a fine powder, the obtained suspension was passed through an absorber plug (20 g).

**Table 15**

| | | | | S [mg/L] | N [mg/L] | Halogen [mg/L] |
|---|---|---|---|---|---|---|
| | pyrolysis oil (crude) | | | 60 | 830 | 150 |

| Ex. | crude pyrolysis oil | trapping agent# | | | | |
|---|---|---|---|---|---|---|
| 13a | 38 g | (d1), 20 g | 2 hrs @ r.t. | 7 | 6 | 25 |
| 13b | 36 g | (d2), 20 g | 2 hrs @ r.t. | 15 | 5 | 35 |
| 13c | 37 g | (d3), 20 g | 2 hrs @ r.t. | 3 | 1 | 15 |
| 13d | 37 g | (d4), 20 g | 2 hrs @ r.t. | 30 | 320 | 70 |
| 13e | 60 g | (d5), 20 g | 2 hrs @ r.t. | 45 | 590 | 95 |
| 13f | 40 g | (d6), 20 g | 2 hrs @ r.t. | 45 | 570 | 80 |
| 13g | 40 g | (d7), 20 g | 2 hrs @ r.t. | 15 | 15 | 35 |
| 13h | 40 g | (d8) 20 g | 2 hrs @ r.t. | 15 | 3 | 40 |
| 13i | 40 g | (d9), 20 g | 2 hrs @ r.t. | 55 | 560 | 85 |
| 13k | 40 g | (d10), 20 g | 2 hrs @ r.t. | 40 | 510 | 50 |
| 13l | 20 g | (d8), 5 g | 2 hrs @ reflux | 25 | 75 | 35 |
| 13m | 20 g | (d11), 5 g | 2 hrs @ r.t. under stirring | 20 | 140 | 50 |
| 13n | 20 g | silica pellets Perlkat®79-3 1040, 5 g | 2 hrs @ r.t. under stirring | 20 | 110 | 50 |
| 13o | 20 g | (d11), 5 g | 2 hrs @ 50°C under stirring | 20 | 80 | 50 |
| 13p | 20 g | (d11), 5 g | 2 hrs @ reflux under stirring | 20 | 75 | 40 |
| 13q | 20 g | (d12), 5 g | 2 hrs @ 50°C under stirring | 20 | 70 | 40 |
| 13r | 20 g | (d12), 5 g | 2 hrs @ at reflux under stirring | 20 | 65 | 30 |
| 13s | 20 g | (d13), 5 g | 2 hrs @ r.t. under stirring | 20 | 75 | 22 |
| 13t | 20 g | (d13), 5g | 2 hrs @ reflux under stirring | 20 | 35 | 10 |
| 13u | 20 g | (d14), 5 g | 2 hrs @ r.t. under stirring | 40 | 490 | 70 |
| 13v | 20 g | (d14), 5 g | 2 hrs @ reflux under stirring | 35 | 280 | 36 |

| | | | | | | |
|---|---|---|---|---|---|---|
| trapping agent # Trapping agent (d1): Aluminium oxide acidic Trapping agent (d2): Aluminium oxide 90 active neutral Trapping agent (d3): Silica gel 60 (0.040-0.063 mm) Trapping agent (d4): Activated carbon, 0.5-1mm Trapping agent (d5): Kaolin Trapping agent (d6): Kaolinite Trapping agent (d7): Montmorillonite Trapping agent (d8): Montmorillonite K 10 Trapping agent (d9): granular activated carbon GPP-20® Trapping agent (d10): granular activated carbon, reactivated Resorb SC® Trapping agent (d11): silica pellets Perlkat® 97-0 3050 Trapping agent (d12): silica pellets Perlkat® 79-3 1040 Trapping agent (d13): silica alumina, Siral® 40 Trapping agent (d14): bentonite | | | | | | |

### Example 14:

The pyrolysis oil obtained in example 10 was treated with 2.5 g of Amberlyst® 35 ion exchange resin from Dow in a round bottom flask. After stirring for 2 hours at ambient temperature the so-treated pyrolysis oil was filtered on paper filter. The filtrate was then analyzed showing a reduced amount of N-component. The results are compiled in table 16 below.

**Table 16**

| | S [mg/L] | N [mg/L] | Halogen [mg/L] |
|---|---|---|---|
| pyrolysis oil from example 10 | less than 1 | 220 | less than 0.5 |
| after treatment with Amberlyst® 35 | less than 1 | 5 | less than 0.5 |

## Claims

1. A process for purifying a crude nitrogen-containing, sulfur-containing and halogen-containing pyrolysis oil originating from the pyrolysis of plastic waste, the process comprising the steps:
(i) subjecting the crude pyrolysis oil to a treatment with a trapping agent capable of binding sulfur, nitrogen and halogen, wherein the trapping agent is selected from
(a) an elemental metal of group 1, 2, 6, 7, 8, 9, 10, 11, 12, 13 of the IUPAC periodic table of elements or a mixture thereof or an alloy thereof;
(b) an oxide of metals of group 1, 2, 6, 7, 8, 9, 10, 11, 12, 13 of the IUPAC periodic table of elements or a mixture thereof;
(c) an alkoxide of metals of group 1, 2 of the IUPAC periodic table of elements or a mixture thereof;
(d) a solid sorption agent selected from activated carbon, alumina, silica, clay materials, zeolites, ion exchange resins, absorbent organic polymers or a combination thereof;
or a combination of at least two trapping agents (a), (b), (c) or (d);
(ii) separating the product obtained into a purified pyrolysis oil fraction having a reduced nitrogen, sulfur and halogen content in relation to the crude pyrolysis oil and a fraction comprising the trapping agent which has bound at least a part of the sulfur, nitrogen and halogen present in the crude pyrolysis oil.

2. The process as claimed in claim 1, wherein the crude pyrolysis oil further has a heavy metal content and the purified pyrolysis oil obtained in step (ii) has a reduced heavy-metal content.

3. The process as claimed in claim 1 or 2, wherein the trapping agent (a) used in step (i) is an elemental metal selected from group 1, 2, 6, 8, 9, 10, 11, 12 or 13 of the IUPAC periodic table of elements or a mixture thereof or an alloy thereof.

4. The process as claimed in claim 3, wherein the trapping agent (a) is used in combination with a further trapping agent selected from the trapping agent (b), trapping agent (d) or a combination thereof, the trapping agent (b) preferably being an oxide of metals of group 6, 7, 8, 9, 10, 11 or 12 of the IUPAC periodic table of elements or a mixture thereof, the trapping agent (d) preferably being zeolite.

5. The process as claimed in claim 1 or 2, wherein the trapping agent (b) used in step (i) is an oxide of metals of Group 2, 6, 7, 8, 9, 10, 11, 12, 13 of the IUPAC periodic table of elements or a combination thereof, wherein the treatment is carried out in the presence of hydrogen at a temperature in the range from 100 to 500°C, preferably 150 to 300°C.

6. The process as claimed in claim 5, wherein the trapping agent (b) is an oxide of calcium, chromium, molybdenum, tungsten, manganese, iron, cobalt, nickel, copper, zinc or a mixture thereof.

7. The process as claimed in claim 5 or 6, wherein the treatment is carried out at a hydrogen partial pressure in the range from 5 to 500 bar, preferably 20 to 150 bar.

8. The process as claimed in claim 1 or 2, wherein the trapping agent (c) is an alkali metal or alkaline earth metal alkoxide having 1 to 20 carbon atoms, an alkali metal or alkaline earth metal cycloalkoxide having 5 to 20 carbon atoms or a combination thereof.

9. The process as claimed in any one of the preceding claims, wherein the separation in step (ii) comprises a filtration, extraction, distillation, membrane separation or a combination thereof.

10. The process as claimed in claim 9, wherein step (ii) comprises an extraction with a polar solvent, preferably selected from water, acidic aqueous solutions, basic aqueous solutions, water-miscible organic solvents and mixtures thereof

11. The process as claimed in claim 9 or 10, wherein step (ii) comprises a distillation to obtain a bottom product having an enriched nitrogen, sulfur and halogen content and a vapor having a reduced nitrogen, sulfur and halogen content.

12. The process as claimed in claim 11, wherein the vapor is separated into a fraction having a boiling temperature of at most 350°C, preferably at most 200°C, at atmospheric pressure and a fraction having a boiling temperature of 200°C or more, preferably 350°C or more, at atmospheric pressure.

13. A process for the production of syngas, comprising the steps
(i) providing a crude nitrogen-containing, sulfur-containing and halogen-containing pyrolysis oil originating from the pyrolysis of plastic waste;
(ii) subjecting the crude pyrolysis oil to a process as claimed in any one of claims 1 to 12; and
(iii) subjecting the purified pyrolysis oil obtained in step (ii) to a partial oxidation to produce syngas.

14. A process for the production of hydrocarbon compounds having a lower molecular weight than a pyrolysis oil originating from the pyrolysis of plastic waste, comprising the steps
(i) providing a crude nitrogen-containing, sulfur-containing and halogen-containing pyrolysis oil originating from the pyrolysis of plastic waste;
(ii) subjecting the crude pyrolysis oil to a process as claimed in any one of claims 1 to 12; and
(iii) subjecting the purified pyrolysis oil obtained in step (ii) to a treatment in a (steam) cracker unit and isolating a stream comprising the lower molecular weight hydrocarbon compounds.

15. Use of a purified pyrolysis oil obtainable by a process as defined in any one of claims 1 to 12 as feedstock for a (steam) cracker or as feedstock for a partial oxidation unit to produce syngas.
